# EUROPÄISCHE PATENTSCHRIFT

(11) **EP 2 921 326 B1**
(45) Veröffentlichungstag und Bekanntmachung des Hinweises auf die Patenterteilung: **18.10.2017**
(21) Anmeldenummer: 15000278.0
(22) Anmeldetag: 30.01.2015
(51) Int. Cl.: F25B 5/02, F25B 49/02, B60H 1/00, B60H 1/32, F25B 41/00, B60L 11/18, F25B 45/00

(54) **Fahrzeugklimaanlage mit einem Kältemittelkreislauf**
Vehicle air conditioning system comprising a coolant circuit
Climatiseur de véhicule doté d'un circuit d'agent de refroidissement

(30) Priorität: 19.03.2014 DE 102014003908
(43) Veröffentlichungstag der Anmeldung: 23.09.2015
(73) Patentinhaber: AUDI AG, 85045 Ingolstadt (DE)
(72) Erfinder: Rebinger, Christian, DE - 80807 München (DE); Schroeder, Dirk, DE - 85077 Manching (DE); Strasser, Klaus, DE - 85072 Eichstätt (DE); Gonzalez, Ruben, DE - 85051 Ingolstadt (DE)

(56) Entgegenhaltungen:
- EP-A2- 0 274 727
- WO-A1-2013/017936

## Beschreibung

Die Erfindung betrifft eine Fahrzeugklimaanlage mit einem Kältemittelkreislauf gemäß dem Oberbegriff des Patentanspruchs 1.

Der Einsatz von Kältemittelkreisläufen in Fahrzeugklimaanlagen ist bekannt, wobei manche Varianten eine 2-Verdampferanlage vorsehen, nämlich einen Frontverdampfer und einen Heckanlagenverdampfer. Je nach Verschaltung und aktivem Betrieb der jeweiligen Wärmeübertragung variiert der Bedarf an benötigtem aktivem Kältemittel im Kältemittelkreislauf.

Elektrifizierte Fahrzeuge benötigen neben dem Frontverdampfer als mindestens einen Innenraumverdampfer einen separaten Kühlmittelkreislauf zur Konditionierung und Temperierung des in der Regel als Hochvoltbatterie realisierten Energiespeichers. Ein solcher Kühlmittelkreislauf wird mittels eines Wärmeübertragers mit dem Kältemittelkreislauf gekoppelt, wobei ein solcher Wärmeübertrager seinerseits ebenfalls als Verdampfer zum Kühlen eines Luftstromes bzw. als sogenannter Chiller zum Kühlen von Wasser ausgebildet ist.

Es sind darüber hinaus Ausführungen bekannt, die den Hochvoltspeicher per Luftstrom konditionieren. Dessen Abkühlung erfolgt per luftseitig geschalteten Verdampfer, analog dem Innenraum-Wärmeübertrager. Eine weitere bekannte Ausführung ist eine Hochvoltspeicher-Direktkonditionierung mit Kältemittel, das ohne Zwischenkälteträger direkt in die Batterie geführt wird und deren Abwärme aufnimmt.

Auch der Einsatz des Kältemittelkreislaufs der Fahrzeugklimaanlage in einem Wärmepumpenbetrieb zum Aufheizen der Fahrgastzelle ist bekannt. In seiner Funktion als Wärmepumpe ist der Kältemittelkreislauf in der Lage, einen Luft- oder auch Wasserstrom bzw. Kühlmittelstrom zu erwärmen und diese Wärme direkt bzw. indirekt an die Luft der Fahrgastzelle abzugeben. Je nach Betriebsweise der Fahrzeugklimaanlage, ob also geheizt bzw. gekühlt wird oder welche Anzahl von Wärmeübertrager aktiv betrieben werden, variiert auch in diesem Fall die zur optimalen Betriebsweise benötigte Menge an aktivem bzw. tatsächlich benötigtem Kältemittel im Kältemittelkreislauf.

Die unterschiedlichen Betriebsweisen einer solchen Kälteanlage können somit je nach Verschaltung der Komponenten unterschiedliche Kältemittelfüllmengen als Optimum benötigen.

Bei einer gattungsbildenden Fahrzeugklimaanlage gemäß der DE 10 2011 118 162 A1 wird dieses Problem dadurch gelöst, dass Kältemittel aus den nichtaktiven Bereichen abgesaugt und in aktive Bereiche des Kältemittelkreislaufs durch die Schaltung einer Verbindung der nichtaktiven Bereiche mit der aktiven Niederdruckseite eingespeist wird. Insbesondere wird in bestimmten Betriebsmodi bei einem Kältemittelüberschuss Kältemittel aus den aktiven Bereichen des Kältemittelkreislaufs in die nichtaktiven Bereiche verlagert. Damit soll durch Absaugen und Auslagern von Kältemittel aus bzw. in inaktive Bereiche bzw. in aktive Bereiche des Kältemittelkreislaufs oder Komponenten desselben eine Regelungsmöglichkeit der aktiven Kältemittelfüllmenge realisiert werden.

Die WO 2013/017936 A1 beschreibt einen Kältemittelkreislauf mit einem Kältemittelverdichter, einem ersten und zweiten Kältemittelkondensator und einem Verdampfer, dem ein Expansionsorgan vorgeschaltet ist. Dem Kältemittelkondensator ist ein Gas-Flüssigkeits-Abscheider in Strömungsrichtung des Kältemittels nachgeschaltet, so dass flüssiges Kältemittel über einen Wärmeübertrager zur indirekten Kühlung von elektrischen Komponenten des Fahrzeugs und wieder zurück in den Kältemittelkreislauf zum Expansionsorgan des Verdampfers strömen kann. Mit der Verbindungsleitung zwischen dem Gas-Flüssigkeits-Abscheider und dem Eingang dieses Wärmeübertragers kann mittels eines Ventils ein Kältemittelsammler verbunden werden. Dieser Kältemittelsammler ist als Zylinder-Kolben-Anordnung mit einem mittels eines elektrischen Antriebs verschiebbaren Kolben ausgeführt, der den Zylinder in zwei Kammern teilt. Eine dieser beiden Kammern kann mittels des Ventils mit der Verbindungsleitung so verbunden werden, dass entweder von dem Gas-Flüssigkeits-Abscheider strömendes Kühlmittel in eine Kammer eingelagert wird oder das eingelagerte Kühlmittel direkt in den Wärmeübertrager strömen kann.

Somit wird bei diesem Kältemittelkreislauf gemäß der WO 2013/017936 A1 einerseits das gasförmige Kältemittel des Gas-Flüssigkeits-Abscheiders dem Expansionsorgan des Verdampfers und andererseits auch das in dem Wärmeübertrager verdampfte Kältemittel, welches dem Gas-Flüssigkeits-Abscheider als flüssiges Kältemittel entnommen ist, ebenso dem Expansionsorgan des Verdampfers vor einer Kühlung mittels des zweiten Kältemittelkondensators zugeführt. In Abhängigkeit der mittels Temperatursensoren am Eingang und Ausgang des Wärmeübertragers angeordneten Sensoren werden die Einlagerung von flüssigem Kältemittel in den Kältemittelsammler als auch dessen Auslagerung in den Wärmeübertrager gesteuert. Mit einer entsprechenden Einstellung des dem Kältemittelsammler zugeordneten Ventils soll verhindert werden, dass das ganze Volumen des flüssigen Kältemittels in den Kältemittelsammler strömen kann und somit ein kontinuierlicher Kältemittelstrom zum Kühlen der elektrischen Komponenten zur Verfügung steht, insbesondere wenn der Kältemittelverdichter nicht in Betrieb ist.

Um einen überhöhten Kältemitteldruck in einem Kältemittelkreislauf eine Fahrzeugklimaanlage zu verhindern, schlägt die EP 0 274 727 vor, dem Kältemittelkreislauf Kältemittel zu entziehen und kurzfristig in einem auf der Hochdruckseite eines Kältemittelverdichters des Kältemittelkreislaufes angeordneten Kältemittelbehälter zu speichern. Hierzu ist ein von einem Drucksensor gesteuertes Magnetventil vorgesehen, über welches bei einem unzulässig hohen Druck Kältemittel in den Kältemittelbehälter strömen lässt. Dieser Kältemittelbehälter ist als Zylinder-Kolbeneinheit ausgebildet, innerhalb derer eine als Druckspeicher auf deren Kolben wirkende Feder vorgesehen ist. Anstelle des Drucksensors kann auch ein Überdruckventil eingesetzt werden, welches bei Überschreiten eines unzulässig hohen Systemdruckes öffnet und den Weg zum Kältemittelbehälter freigibt, bis der Systemdruck wieder gefallen ist. Die Rückführung des Kältemittels in den Kältemittelkreislauf erfolgt dabei kontinuierlich nach kurzzeitiger Speicherung in dem Kältemittelbehälter über ein Kapillarrohr an die Saugseite des Kältemittelverdichters.

Ferner beschreibt auch die DE 37 21 388 C1 eine Fahrzeugklimaanlage mit einem Kältemittelkreislauf, der als Komponenten einen Verdampfer, einen Kältemittelverdichter, einen Kältemittelkondensator, einen Sammelbehälter und ein dem Verdampfer zugeordnetes Expansionsventil aufweist. Um bei einer hohen Umgebungstemperatur den Druck auf der Hochdruckseite des Kältemittelverdichters zu begrenzen, ist ein Zwischenspeicher vorgesehen, der mit der Hochdruckseite des Kältemittelverdichters über ein Überdrucksicherheitsventil verbunden ist. Bei Übersteigen eines vorgegebenen Maximaldrucks stellt dieses Überdrucksicherheitsventil eine Verbindung zum Zwischenspeicher her, so dass Kältemittel in diesen Zwischenspeicher abströmen kann. Um diesen Zwischenspeicher wieder entleeren zu können, ist ein Entladeventil vorgesehen, das den Zwischenspeicher mit der Niederdruckseite des Kältemittelverdichters verbindet.

Der Vollständigkeit halber sei auch auf die DE 10 2009 035 329 A1 verwiesen, die eine Fahrzeugklimaanlage offenbart, welche als Komponenten einen Verdampfer, einen Kältemittelverdichter, einen Kältemittelkondensator, ein dem Verdampfer zugeordnetes Expansionsventil und einen zur Kopplung mit einem Kühlmittelkreislauf einer Batterie vorgesehener Wärmeübertrager mit zugeordnetem Expansionsventil aufweist.

Die Aufgabe der Erfindung besteht darin, eine alternative Lösung zum Stand der Technik anzugeben, mit der für jeden Betriebsmodus der Fahrzeugklimaanlage die notwendige bzw. optimale Kältemittelmenge zur Verfügung gestellt werden kann.

Diese Aufgabe wird gelöst durch eine Fahrzeugklimaanlage mit den Merkmalen des Patentanspruchs 1.

Eine solche Fahrzeugklimaanlage mit einem Kältemittelkreislauf, welcher als Komponenten wenigstens einen Verdampfer, einen Kältemittelverdichter, einen Kältemittelkondensator, ein dem Verdampfer zugeordnetes Expansionsventil und wenigstens einen zur Kopplung mit einem Kühlmittelkreislauf einer Wärmequelle vorgesehener Wärmeübertrager mit zugeordnetem Expansionsventil aufweist, wobei die Komponenten mittels einer Kältemittelleitung verbunden sind und die Reihenschaltung aus dem Wärmeübertrager und dem zugeordneten Expansionsventil parallel zur Reihenschaltung aus dem Verdampfer und dem zugeordneten Expansionsventil angeordnet ist, zeichnet sich erfindungsgemäß dadurch aus, dass
- ein auf der Hochdruckseite des Kältemittelverdichters mit der Kältemittelleitung verbundener Kältemittelbehälter vorgesehen ist, welcher eine Kältemittel aufnehmende Kammer mit einem steuerbaren Volumen aufweist,
- die Kammer des Kältemittelbehälters mit einem mit dem Ausgang des Kältemittelkondensators verbundenen Leitungsabschnitt der Kältemittelleitung verbunden ist,
- Sensormittel vorgesehen sind, welche zur Bestimmung des Drucks und der Temperatur des Kältemittels als Betriebsparameter am Ausgang des Kältemittelkondensators in Fließrichtung des Kältemittels angeordnet sind, und
- eine Steuereinheit vorgesehen ist, mit welcher in Abhängigkeit der Betriebsparameter des Kältemittelkreislaufs das Volumen der Kammer des Kältemittelbehälters gesteuert wird.

Bei dieser erfindungsgemäßen Fahrzeugklimaanlage wird ein steuerbares Zusatzvolumen in den Kältemittelkreislauf in einem hochdruckseitigen Leitungsabschnitt der Kältemittelleitung realisiert, wobei dieser Leitungsabschnitt in allen Betriebsweisen genutzt wird. Dieses steuerbare Zusatzvolumen wird mittels einer ein steuerbares Volumen aufweisenden Kammer eines Kältemittelbehälters realisiert. Je nach Bedarf kann das Volumen variiert werden und der optimale Betriebspunkt der Fahrzeugklimaanlage und damit die optimale Befüllung des Systems eingestellt werden.

Nach einer vorteilhaften Ausgestaltung der Erfindung gemäß der erstgenannten Lösung ist die Kammer des Kältemittelbehälters als Leitungsabschnitt des Leitungsabschnittes ausgebildet. Damit wird diese Kammer mit dem steuerbaren Volumen permanent von dem Kältemittel durchströmt.

Nach einer anderen vorteilhaften Ausgestaltung der Erfindung ist die Kammer des Kältemittelbehälters über eine Abzweigleitung mit dem Leitungsabschnitt verbunden. Damit kann dem Kältemittelkreislauf Kältemittel entzogen und in die Kammer mit variablen Volumen entsprechend dem eingestellten Volumen eingelagert werden. Der Aggregatzustand des eingelagerten Kältemittels ist in diesem Systemabschnitt bevorzugt flüssig.

Besonders vorteilhaft ist es gemäß einer weiteren Ausgestaltung der Erfindung gemäß der erstgenannten Lösung, wenn der Kältemittelbehälter als Zylinder-Kolben-Anordnung ausgebildet ist und die Kammer durch den Kolben der Zylinder-Kolben-Anordnung begrenzt ist, wobei eine undurchlässige Dichtung zwischen dem Kolben und dem Zylinder dieser Zylinder-Kolben-Anordnung anzustreben ist. Ansonsten ist vorzugsweise vorgesehen, eine von dem Kolben begrenzte weitere Kammer der Zylinder-Kolben-Anordnung über eine Absaugleitung mit der zum Kältemittelverdichter führenden Niederdruckseite des Kältemittelkreislaufs zu verbinden. Damit wird das auf der Kolbenrückseite des Kolbens sich sammelnde Kältemittel wieder in den Kältemittelkreislauf zurück gefördert, wobei dies vorzugsweise mittels eines in der Absaugleitung angeordneten Absaugventils realisiert ist, welches zur Steuerung mit der Steuereinheit verbunden ist.

Schließlich sind gemäß einer letzten vorteilhaften Ausgestaltung der Erfindung Sensormittel vorgesehen, welche zur Bestimmung des Drucks und der Temperatur des Kältemittels als Betriebsparameter am Ausgang des Kältemittelkondensators in Fließrichtung des Kältemittels angeordnet sind. Diese Messwerte des Drucks in der Temperatur werden von der Steuereinheit, in der Regel ein Steuergerät verarbeitet und entsprechend Steuersignale zur Steuerung des Volumens der Kammer des Kältemittelbehälters bzw. zur Steuerung des Abzweigventils erzeugt.

Die Erfindung wird nachfolgend anhand von Ausführungsbeispielen unter Bezugnahme auf die beigefügten Figuren ausführlich beschrieben. Es zeigen:
- Figur 1: ein Prinzipschaltbild eines Kältemittelkreislaufs einer Fahrzeugklimaanlage gemäß eines ersten Ausführungsbeispiels gemäß der Erfindung, und
- Figur 2: ein Prinzipschaltbild eines Kältemittelkreislaufes einer Fahrzeugklimaanlage gemäß eines zweiten Ausführungsbeispiels gemäß der Erfindung.

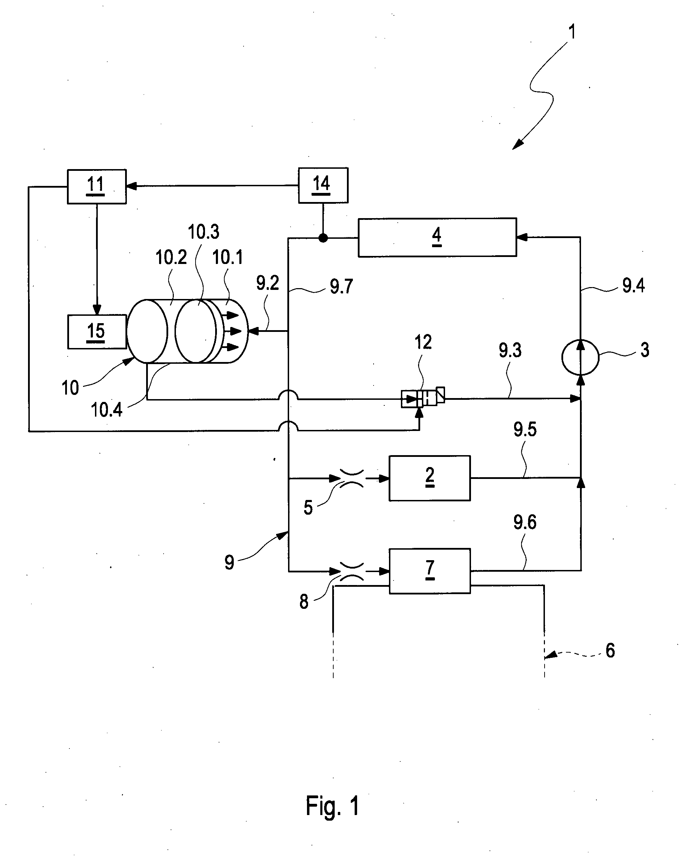

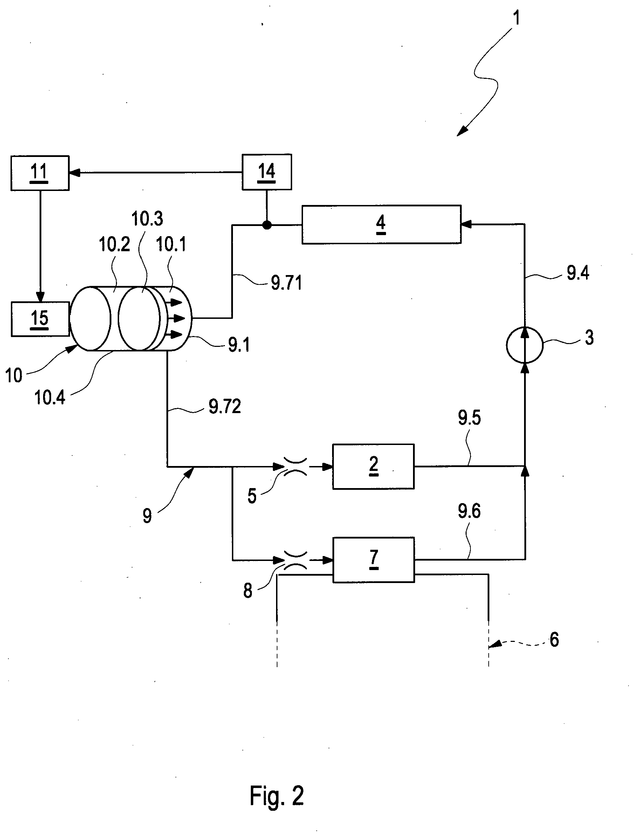

Die Figuren 1 und 2 zeigen jeweils einen Kältemittelkreislauf 1 mit identischer Grundstruktur einer Fahrzeugklimaanlage eines Fahrzeugs (nicht dargestellt).

Der Kältemittelkreislauf 1 dieser Figuren 1 und 2 umfasst als Komponenten einen Verdampfer 2 als Innenwärmeübertrager, einen Kältemittelverdichter 3, einen Kältemittelkondensator 4 als Außenwärmeübertrager, ein dem Verdampfer 2 in Strömungsrichtung des Kältemittels vorgeschaltetes Expansionsventil 5. Ferner umfasst der Kältemittelkreislauf 1 eine Reihenschaltung aus einem Wärmeübertrager 7 als weiteren Verdampfer und einem dem Wärmeübertrager 7 zugeordneten Expansionsventil 8, die parallel zur Reihenschaltung aus dem Expansionsventil 5 und dem Verdampfer 2 in dem Kältemittelkreislauf 1 angeordnet sind. Dieser Wärmeübertrager 7 ist über einen Kühlmittelkreislauf 6 mit einer Wärmequelle (nicht dargestellt) gekoppelt, die bspw. eine Hochvoltbatterie oder ein Elektromotor darstellen kann. Dieser Wärmeübertrager 7 arbeitet ebenfalls als Verdampfer zur Kühlung eines Luftstromes als Kühlmittel oder als Chiller zum Kühlen von Wasser als Kühlmittel. Alternativ kann er auch direkt in die zu kühlende Komponente integriert sein und folglich als Direktverdampfer fungieren. Die aufgeführten Komponenten sind zur Bildung des Kältemittelkreislaufes 1 über eine Kältemittelleitung 9 miteinander verbunden.

Der Kältemittelverdichter 3 ist an seinem hochdruckseitigen Ausgang über einen Leitungsabschnitt 9.4 der Kältemittelleitung 9 mit dem Kältemittelkondensator 4 verbunden, während der Verdampfer 2 bzw. der Wärmeübertrager 7 über einen Leitungsabschnitt 9.5 bzw. 9.6 der Kältemittelleitung 9 mit dem niederdruckseitigen Eingang des Kältemittelverdichters 3 verbunden ist.

In Strömungsrichtung des Kältemittels ist der Ausgang des Kältemittelkondensators 4 über einen Leitungsabschnitt 9.7 der Kältemittelleitung 9 mit dem dem Verdampfer 2 zugeordneten Expansionsventil 5 bzw. mit dem dem Wärmeübertrager 7 zugeordneten Expansionsventil 8 verbunden.

Im Folgenden werden die Kältemittelkreisläufe 1 gemäß den Figuren 1 und 2 im Einzelnen erläutert.

Nach Figur 1 ist neben dem bereits standardmäßig in dem Kältemittelkondensator 4 (mit Unterkühlfunktion) integrierten Kältemittelspeicher ein Kältemittelbehälter 10 vorgesehen, der in einer vorteilhaften Variante als Zylinder-Kolben-Anordnung ausgeführt ist. Ein in dieser Zylinder-Kolben-Anordnung 10 verschiebbar gelagerter Kolben 10.3 teilt das Innenvolumen des Zylinders 10.4 dieser Zylinder-Kolben-Anordnung 10 in eine Kammer 10.1 und eine weitere Kammer 10.2, wobei in Abhängigkeit der Stellung des Kolbens 10.3 das Volumen der Kammer 10.1 steuerbar ist.

Diese Kammer 10.1 mit steuerbaren Volumen ist über eine Abzweigleitung 9.2 mit dem Leitungsabschnitt 9.7 der Kältemittelleitung 9 verbunden und stellt damit ein steuerbares Zusatzvolumen für den Kältemittelkreislauf 1 dar. Durch Verstellen des Kolbens 10.3 des Kältemittelbehälters 10 kann entweder das Volumen der Kammer 10.1 vergrößert und damit Kältemittel aus dem Kältemittelkreislauf 1 abgesaugt und in diese Kammer 10.1 eingelagert werden oder das Volumen der Kammer 10.1 verkleinert und damit Kältemittel wieder in den Kältemittelkreislauf 1 zurück gefördert werden.

Die Stellung des Kolbens 10.3 des Kältemittelbehälters 10 wird mittels einer Regelvorrichtung (Aktorik) 15 des Kältemittelbehälters 10 in Abhängigkeit eines Steuersignals eingestellt, welches von einer als Steuergerät ausgebildeten Steuereinheit 11 in Abhängigkeit von Betriebsparametern erzeugt wird. Diese Betriebsparameter werden idealerweise als Druck und Temperatur am Ausgang des Kältemittelkondensators 4 durch Sensormittel 14, bspw. durch einen pT-Sensor erfasst und dem Steuergerät 11 zur Auswertung zugeführt. In Abhängigkeit der gemessenen Sensorwerte steuert die Regelvorrichtung 15 den verfahrbaren Kolben 10.3 an.

Das Verschieben des Kolbens 10.3 erfolgt in Abhängigkeit der gemessenen Unterkühlung des Kältemittels am Austritt des Kältemittelkondensators 4. Bei zu hoher Unterkühlung, bspw. größer als 15 K, ist der Kältemittelkreislauf 1 für die aktuell gewählte Verschaltung (Variante a: nur Innenwärmeübertrager 2 aktiv, Variante b: nur Wärmeübertrager 7 geschaltet, oder Variante c: Dualmode mit Innenwärmeübertrager 2 und Wärmeübertrager 7, wobei i.d.R. bei Variante c auf die optimale Füllmenge ausgelegt wird.) überfüllt, so dass durch entsprechende Verstellung des Kolbens 10.3 ein größeres Volumen durch die Kammer 10.1 bereitgestellt werden muss, in das das Kältemittel eingelagert wird. Umgekehrt wird bei zu geringer Unterkühlung das Volumen verringert und damit ausgelagertes Kältemittel wieder aktiv zurück in den Kältemittelkreislauf 1 geschoben. In Abhängigkeit der gemessenen Werte des pT-Sensors 14 steuert die Regelvorrichtung 15 den Kolben 10.3 an und lässt diesen so lange verfahren, bis sich eine akzeptable Unterkühlung einstellt.

Damit kann in Abhängigkeit des Betriebszustandes des Kältemittelkreislaufs 1, also je nach Bedarf das Volumen der Kammer 10.1 variiert werden und damit der optimale Betriebspunkt mit der optimalen Befüllung mit Kältemittel des Kältemittelkreislaufes 1 eingestellt werden.

In vorteilhafter Weise sollte der Kolben 10.3 der Zylinder-Kolben-Anordnung 10 dicht gegenüber dem Zylinder 10.4 sein. Jedoch ist es im Falle einer gewissen fehlenden Dichtigkeit zusätzlich möglich, das in der weiteren Kammer 10.2 gesammelte Kältemittel wieder in den Kältemittelkreislauf 1 zurückzufördern. Dies wird gemäß Figur 1 mittels einer Absaugleitung 9.3 realisiert, die die weitere Kammer 10.2 über ein Absaugventil 12 mit der Niederdruckseite des Kältemittelkreislaufs 1, idealerweise also mit dem niederdruckseitigen Eingang des Kältemittelverdichters 3 bzw. der dem Verdichter 3 zugeführten Kältemittelleitung verbindet. Der Anschluss der Absaugleitung 9.3 an der weiteren Kammer 10.2 liegt dabei am tiefsten Punkt derselben (Ölthematik). Ein Absaugen der Kammer 10.2 bewirkt parallel ein kraftoptimiertes Öffnen des Kolbens 10.3, da der Gegendruck in der Kammer 10.2 reduziert werden würde.

Die Figur 2 zeigt einen Kältemittelkreislauf 1 einer Fahrzeugklimaanlage, der im Vergleich zu Figur 1 mit den gleichen Komponenten, insbesondere ebenso mit einer Zylinder-Kolben-Anordnung als Kältemittelbehälter 10 realisiert ist. Der einzige Unterschied besteht darin, dass die Zylinder-Kolben-Anordnung 10 nicht über eine Abzweigleitung mit dem Leitungsabschnitt 9.7 des Kältemittelkreislaufs 1 verbunden ist, sondern dass die Kammer 10.1 mit ihrem steuerbaren Volumen einen Leitungsabschnitt 9.1 des Leitungsabschnittes 9.7 bildet, so dass ein Leitungsabschnitt 9.71 eine Verbindung des Ausgangs des Kältemittelkondensators 4 mit der Kammer 10.1 in Fließrichtung des Kältemittels herstellt und ein weiterer Leitungsabschnitt 9.72 die Kammer 10.1 in Fließrichtung des Kältemittels mit dem Expansionsventilen 5 und 8 verbindet, wobei der Austritt aus der Kammer 10.1 optimalerweise am tiefsten Punkt der Kammer 10.1 vorgesehen ist, um mögliche Öleinlagerungen zu minimieren, aber auch um hochdichtes, flüssiges Kältemittel zurückzuführen, um damit den Rückholprozess zu beschleunigen. Damit wird die Kammer 10.1 permanent von Kältemittel aktiv durchströmt.

Die Steuerung der Zylinder-Kolben-Anordnung 10 erfolgt bei diesem Kältemittelkreislauf 1 gemäß Figur 2 in gleicher Weise wie im Zusammenhang mit Figur 1 dargestellt wurde. Auch die Eigenschaften dieses Kältemittelkreislaufes 1 sind die gleichen wie diejenigen des Kältemittelkreislaufes 1 nach Figur 1. Im Fall eines undichten Kolbens 10.3 kann auch hier auf die Absauglösung mit Leitungsstrang 9.3 zur Niederdruckseite hinführend zurückgegriffen werden.

Bei den Kältekreisläufen 1 gemäß den Figuren 1 und 2 ist es sinnvoll, den Kältemittelbehälter 10 an einer "kühlen" Stelle im Motorraum des Fahrzeugs zur Vermeidung eines Nachverdampfens des eingelagerten Kältemittels zu positionieren. Optimal ist die Einbindung des Kältemittelbehälters 10 an einer Stelle des Kältemittelkreislauf 1, die aufgrund der anliegenden Umgebungstemperatur von der Drucklage unterhalb des Niveaus derjenigen Stelle zu liegen kommt, an welcher Kältemittel dem Kältemittelbehälter 10 zugeführt wird, da ein Druckgefälle die Umverlagerung aus dem Kältemittelkreislauf 1 in den Kältemittelbehälter 10 unterstützt.

Die Bereitstellung eines variablen Zusatzvolumen für den Kältemittelkreislauf 1 mittels eines Kältemittelbehälters 10 gemäß den Figuren 1 und 2 ist natürlich auch bei Kältemittelkreisläufen einsetzbar, die auch mit einer Wärmepumpenfunktion, gegebenenfalls mit einem weiteren Wärmepumpen-Kondensator ausgestattet sind.

Bei Systemen mit niederdruckseitiger Akkumulatoranordnung macht es Sinn, die Rückführung von Kältemittel vor dem Akkumulator einzuleiten, um eine Flüssigansaugung von Kältemittel über den Verdichter zu vermeiden. Bei Systemen, die einen inneren Wärmeübertrager integriert haben, kann aus demselben Grund die Kältemittelrückführung an dessen Eintrittsseite erfolgen. Grundsätzlich ist es aber für die Kältemittelverdichter in der Regel möglich kurzfristige Flüssigansaugung ohne Schadensauftritt zu überstehen.

Die beschriebene Erfindung ist unabhängig von der Wahl des eingesetzten Kältemittels. Sowohl chemische Betriebsstoffe, wie bspw. R134a und R1234yf, aber auch natürliche Kältemittel, z.B. R744, können in den oben beschriebenen Klimaanlagen eingesetzt werden.

Systeme, welche mit R744 als Kältemittel betrieben werden, sind bevorzugt als Anlagen mit niederdruckseitigem Hauptkältemittelspeicher ausgebildet, wobei auch analog dazu R134a-Füllmengendiskrepanzen bevorzugt durch Vergrößerung dessen Innenvolumens oder durch stromabwärts verbaute Zusatzvolumina bzw. Anheben der Leitungsdimensionen (Anhebung) kompensiert werden.

### Bezugszeichen

- 1: Kältemittelkreislauf
- 2: Verdampfer, Innenwärmeübertrager
- 3: Kältemittelverdichter
- 4: Kältemittelkondensator, Außenwärmeübertrager
- 5: Expansionsventil
- 6: Kühlmittelkreislauf
- 7: Wärmeübertrager
- 8: Expansionsventil
- 9: Kältemittelleitung
- 9.1: Leitungsabschnitt der Kältemittelleitung 9
- 9.2: Abzweigleitung der Kältemittelleitung 9
- 9.3: Absaugleitung der Kältemittelleitung 9
- 9.4: Leitungsabschnitt der Kältemittelleitung 9
- 9.5: Leitungsabschnitt der Kältemittelleitung 9
- 9.6: Leitungsabschnitt der Kältemittelleitung 9
- 9.7: Leitungsabschnitt der Kältemittelleitung 9

- 10: Kältemittelbehälter, Zylinder-Kolben-Anordnung
- 10.1: Kammer der Zylinder-Kolben-Anordnung 10
- 10.2: weitere Kammer der Zylinder-Kolben-Anordnung 10
- 10.3: Kolben der Zylinder-Kolben-Anordnung 10
- 10.4: Zylinder der Zylinder-Kolben-Anordnung 10
- 11: Steuereinheit
- 12: Absaugventil
- 13: Abzweigventil
- 14: Sensormittel, pT-Sensor
- 15: Regelvorrichtung des Kältemittelbehälters 10

## Patentansprüche

1. Fahrzeugklimaanlage mit einem Kältemittelkreislauf (1), welcher als Komponenten wenigstens einen Verdampfer (2), einen Kältemittelverdichter (3), einen Kältemittelkondensator (4), ein dem Verdampfer (2) zugeordnetes Expansionsventil (5) und wenigstens einen zur Kopplung mit einem Kühlmittelkreislauf (6) einer Wärmequelle vorgesehener Wärmeübertrager (7) mit zugeordnetem Expansionsventil (8) aufweist, wobei die Komponenten mittels einer Kältemittelleitung (9) verbunden sind und die Reihenschaltung aus dem Wärmeübertrager (7) und dem zugeordneten Expansionsventil (8) parallel zur Reihenschaltung aus dem Verdampfer (2) und dem zugeordneten Expansionsventil (5) angeordnet ist,
**dadurch gekennzeichnet, dass**
- ein auf der Hochdruckseite des Kältemittelverdichters (3) mit der Kältemittelleitung (9) verbundener Kältemittelbehälter (10) vorgesehen ist, welcher eine Kältemittel aufnehmende Kammer (10.1) mit einem steuerbaren Volumen aufweist,
- die Kammer (10.1) des Kältemittelbehälters (10) mit einem mit dem Ausgang des Kältemittelkondensators (4) verbundenen Leitungsabschnitt (9.7, 9.71) der Kältemittelleitung (9) verbunden ist,
- Sensormittel (14) vorgesehen sind, welche zur Bestimmung des Drucks und der Temperatur des Kältemittels als Betriebsparameter am Ausgang des Kältemittelkondensators (4) in Fließrichtung des Kältemittels angeordnet sind,
und
- eine Steuereinheit (11) vorgesehen ist, mit welcher in Abhängigkeit der Betriebsparameter des Kältemittelkreislaufes (1) das Volumen der Kammer (10.1) des Kältemittelbehälters (10) gesteuert wird.

2. Fahrzeugklimaanlage nach Anspruch 1,
**dadurch gekennzeichnet, dass** die Kammer (10.1) des Kältemittelbehälters (10) als Leitungsabschnitt (9.1) des Leitungsabschnittes (9.7) ausgebildet ist.

3. Fahrzeugklimaanlage nach Anspruch 1,
**dadurch gekennzeichnet, dass** die Kammer (10.1) des Kältemittelbehälters (10) über eine Abzweigleitung (9.2) mit dem Leitungsabschnitt (9.1-) verbunden ist.

4. Fahrzeugklimaanlage nach einem der vorhergehenden Ansprüche,
**dadurch gekennzeichnet, dass** der Kältemittelbehälter (10) als Zylinder-Kolben-Anordnung ausgebildet ist, wobei die Kammer (10.1) durch den Kolben (10.3) der Zylinder-Kolben-Anordnung (10) begrenzt ist.

5. Fahrzeugklimaanlage nach Anspruch 3 und 4,
**dadurch gekennzeichnet, dass** eine von dem Kolben (10.3) begrenzte weitere Kammer (10.2) der Zylinder-Kolben-Anordnung (10) über eine Absaugleitung (9.3) mit der zum Kältemittelverdichter (3) führenden Niederdruckseite des Kältemittelkreislaufs (1) verbunden ist.

6. Fahrzeugklimaanlage nach Anspruch 5,
**dadurch gekennzeichnet, dass** in der Absaugleitung (9.3) ein Absaugventil (12) angeordnet ist, welches zur Steuerung mit der Steuereinheit (11) verbunden ist.

## Claims

1. Vehicle air conditioner having a refrigerant circuit (1) that comprises, as components, at least one evaporator (2), one refrigerant compressor (3), one refrigerant condenser (4), one expansion valve (5) associated with the evaporator (2)and at least one heat exchanger (7) with an associated expansion valve (8) provided for coupling to a coolant circuit (6) of a heat source, wherein the components are connected by means of a refrigerant line (9) and the series connection consisting of the heat exchanger (7) and the associated expansion valve (8) is arranged in parallel to the series connection consisting of the evaporator (2) and the associated expansion valve (5),
**characterised in that**
- a refrigerant container (10) comprising a refrigerant-receiving chamber (10.1) having a controllable volume and connected to the refrigerant line (9) on the highpressure side of the refrigerant compressor (3) is provided,
- the chamber (10.1) of the refrigerant container (10) is connected to a line section (9.7, 9.71) of the refrigerant line (9) that is connected to the outlet of the refrigerant condenser (4),
- sensor means (14) are provided that are arranged as operating parameters at the outlet of the refrigerant condenser (4) in the flow direction of the refrigerant for determining the pressure and the temperature of the refrigerant, and
- a control unit (11) is provided with which the volume of the chamber (10.1) of the refrigerant container (10) is controlled as a function of the operating parameters of the refrigerant circuit (1).

2. Vehicle air conditioner according to claim 1,
**characterised in that** the chamber (10.1) of the refrigerant container (10) is designed as a line section (9.1) of the line section (9.7).

3. Vehicle air conditioner according to claim 1,
**characterised in that** the chamber (10.1) of the refrigerant container (10) is connected to the line section (9.1) via a branch line (9.2).

4. Vehicle air conditioner according to any one of the preceding claims,
**characterised in that** the refrigerant container (10) is designed as a cylinder-piston arrangement, the chamber (10.1) being delimited by the piston (10.3) of the cylinder-piston arrangement (10).

5. Vehicle air conditioner according to claim 3 and 4,
**characterised in that** a further chamber (10.2) of the cylinder-piston arrangement (10), which chamber is delimited by the piston (10.3), is connected via an exhaust line (9.3) to the low-pressure side of the refrigerant circuit (1) leading to the refrigerant compressor (3).

6. Vehicle air conditioner according to claim 5,
**characterised in that** an exhaust valve (12) is arranged in the exhaust line (9.3) and is connected to the control unit (11) for control purposes.

## Revendications

1. Climatiseur de véhicule, avec un circuit frigorifique (1), qui présente en tant que composants au moins un évaporateur (2), un compresseur frigorifique (3), un condensateur frigorifique (4), une soupape d'expansion (5) associée à l'évaporateur (2) et au moins un échangeur de chaleur (7) prévu aux fins du couplage avec un circuit réfrigérant (6) d'une source de chaleur, avec une soupape d'expansion (8) associée, dans lequel les composants sont reliés au moyen d'un conduit d'agent frigorigène (9) et le montage en série composé de l'échangeur de chaleur (7) et la soupape d'expansion (8) associée est disposé de manière parallèle par rapport au montage en série composé de l'évaporateur(2) et la soupape d'expansion (5) associée,
**caractérisé en ce que**
- un contenant d'agent frigorigène (10) relié sur le côté pression élevée du compresseur frigorifique (3) au conduit d'agent frigorigène (9) est prévu, lequel présente une chambre (10.1) recevant un agent frigorigène avec un volume pouvant être commandé,
- la chambre (10.1) du contenant d'agent frigorigène (10) est reliée à une partie de conduit (9.7, 9.71) du conduit d'agent frigorigène (9) reliée à la sortie du condensateur frigorifique (4),
- des moyens de capteur (14) sont prévus, lesquels sont disposés, afin de définir la pression et la température de l'agent frigorigène en tant que paramètres de fonctionnement, au niveau de la sortie du condensateur frigorifique (4) dans la direction d'écoulement de l'agent frigorigène,
et
- une unité de commande (11) est prévue, avec laquelle le volume de la chambre (10.1) du contenant d'agent frigorigène (10) est commandé en fonction des paramètres de fonctionnement du circuit frigorifique (1).

2. Climatiseur de véhicule selon la revendication 1,
**caractérisé en ce que** la chambre (10.1) du contenant d'agent frigorigène (10) est réalisée sous la forme d'une partie de conduit (9.1) de la partie de conduit (9.7).

3. Climatiseur de véhicule selon la revendication 1,
**caractérisé en ce que** la chambre (10.1) du contenant d'agent frigorigène (10) est reliée à la partie de conduit (9.1-) par l'intermédiaire d'un conduit d'embranchement (9.2).

4. Climatiseur de véhicule selon l'une quelconque des revendications précédentes,
**caractérisé en ce que** le contenant d'agent frigorigène (10) est réalisé sous la forme d'un ensemble cylindre-piston, dans lequel la chambre (10.1) est délimitée par le piston (10.3) de l'ensemble cylindre-piston (10).

5. Climatiseur de véhicule selon la revendication 3 et 4,
**caractérisé en ce qu'**une autre chambre (10.2), délimitée par le piston (10.3), de l'ensemble cylindre-piston (10) est reliée au côté basse pression, menant au compresseur frigorifique (3), du circuit frigorifique (1) par l'intermédiaire d'un conduit d'évacuation par aspiration (9.3).

6. Climatiseur de véhicule selon la revendication 5,
**caractérisé en ce qu'**une soupape d'évacuation par aspiration (12) est disposée dans le conduit d'évacuation par aspiration (9.3), laquelle est reliée aux fins de la commande à l'unité de commande (11).
